# FASCICULE DE BREVET EUROPEEN

(11) **EP 2 511 567 B1**
(45) Date de publication et mention de la délivrance du brevet: **19.06.2013**
(21) Numéro de dépôt: 12360026.4
(22) Date de dépôt: 29.03.2012
(51) Int. Cl.: F16G 3/02, B29C 65/02, B65G 15/00, B65G 65/00

(54) **Procédé de fabrication d'une bande de matière en boucle**
Verfahren zur Herstellung eines Bandschleifenmaterials
Method for manufacturing a strip of material in a loop

(30) Priorité: 14.04.2011 FR 1153230
(43) Date de publication de la demande: 17.10.2012
(73) Titulaire: Tanals Société par actions simplifiées (SAS), 68290 Masevaux (FR)
(72) Inventeur: Frey, Pierre-Régis, 68460 Lutterbach (FR)
(74) Mandataire: Koelbel, Caroline

(56) Documents cités:
- DE-A1- 10 029 571
- DE-B- 1 190 747
- FR-A- 661 032
- JP-A- 2000 044 026

## Description

### Domaine technique :

La présente invention concerne un procédé de fabrication d'une bande de matière en boucle, telle que notamment une bande transporteuse, un convoyeur, une courroie de transmission ou similaire, dans laquelle les extrémités de ladite bande sont assemblées par emboîtement de deux dentelures de forme complémentaire prévues respectivement dans le plan de chacune desdites extrémités, les dents de chaque dentelure comportant au moins un orifice transversal aligné avec celui des dents voisines, de sorte à définir, lorsque lesdites dentelures sont emboîtées, au moins un passage transversal agencé pour accueillir une tige de verrouillage.

### Technique antérieure :

On entend par bande de matière en boucle, un ruban plat dont les extrémités sont assemblées pour former une boucle sans fin. Ces bandes de matière en boucle sont utilisées dans de nombreux domaines de l'industrie en tant qu'élément de transport tel qu'une bande transporteuse, un convoyeur, mais aussi en tant qu'élément de transmission tel qu'une courroie, ou similaire.

Il existe à l'heure actuelle différents systèmes d'assemblage réversible ou démontable des extrémités d'une bande transporteuse, permettant avantageusement de procéder à l'installation d'une telle bande sur une machine, à son remplacement, etc., sans avoir à démonter la machine, et sans l'intervention éventuelle du fabricant de la bande transporteuse.

Une solution décrite dans le document EP 1.085.120 prévoit des moyens de jonction comportant une pluralité d'oeillets alignés, rapportés aux extrémités d'une bande transporteuse par des agrafes ou similaires, et assemblés par une tige transversale. Un autre système d'assemblage, connu du document DE 4.442.927, repose sur la présence de dents intégrées dans le plan des extrémités d'une bande transporteuse. Lesdites dents sont destinées à être emboîtées les unes dans les autres et sont chacune pourvues d'un insert métallique dans lequel est vissée au moins une tige d'assemblage.

De tels moyens d'assemblage, mettant en oeuvre des éléments essentiellement métalliques, fragilisent les extrémités assemblées soumises à des tensions importantes. En outre, ces éléments métalliques rigides peuvent créer des zones d'accrochage dangereuses pour les opérateurs et/ou pour les produits transportés. Un autre inconvénient est encore lié au fait que leur présence augmente l'encombrement de la bande transporteuse et par conséquent le diamètre de l'enroulement sur les rouleaux d'entraînement.

Une autre solution est décrite dans la publication DE 100 29 571 A1

Une autre solution décrite dans la publication WO 2007/090148 consiste à adjoindre à chacune des extrémités d'une bande transporteuse, des moyens de jonction comportant des portions de bande présentant des dentelures de formes complémentaires. Après emboîtement des dentelures, une ou plusieurs tiges transversales traversant des orifices ménagés dans chaque dent contribuent au blocage de l'assemblage. Le retrait des tiges permet le démontage de la bande transporteuse. Un des inconvénients d'une telle configuration réside dans le fait que les moyens de jonction doivent être reliés par soudure ou tout procédé similaire aux extrémités de la bande, ce qui conduit finalement à une bande transporteuse comportant trois zones d'assemblage, définissant trois zones de fragilité potentielle. De plus, de tels moyens de jonction ne donnent pas entière satisfaction lorsqu'ils sont appliqués à des bandes à structure renforcée. En effet, un tel système d'assemblage est élastique et s'allonge au cours du temps. En ce qui concerne les bandes dentées ou crantées à entraînement positif, il a été constaté que le pas de la denture s'allonge localement, entraînant au fil du temps un mauvais engrenage dans les poulies. Pour . limiter cet allongement, les portions de bandes que comportent les moyens de jonction peuvent être réalisées dans un matériau plus dur. Cependant, dans ce cas, le diamètre des poulies doit alors être augmenté. Par ailleurs, de tels moyens de jonction doivent impérativement être fabriqués de manière spécifique pour chaque type de bande transporteuse, de sorte que leurs caractéristiques respectives, notamment en termes d'épaisseur, de matière, de couleur, ou d'éventuelle présence d'une âme de traction, concordent. Cet impératif représente une contrainte majeure pour le fabricant de bandes transporteuses, pouvant se retrouver dans l'incapacité de prévoir les coûts et délais pour ses propres clients. Il est en effet lié aux aléas de l'approvisionnement en moyens de jonction appropriés, eux-mêmes fournis par le fabricant de la matière première de la bande transporteuse. De plus, le procédé de fabrication de tels moyens de jonction, dans lequel les orifices pour le passage des tiges d'assemblage sont percés ou forés dans l'épaisseur des dents, est non seulement particulièrement fastidieux et délicat à réaliser, mais ne permet en outre pas de garantir leur parfait alignement, nécessaire à un enfilement aisé et convenable des tiges.

### Exposé de l'invention :

La présente invention vise à pallier ces inconvénients en proposant un procédé de fabrication d'une bande de matière en boucle dans laquelle les moyens de jonction sont directement intégrés aux extrémités de ladite bande de matière, ce qui permet d'éviter tous les problèmes précédemment évoqués liés aux éléments de jonction rapportés sur lesdites extrémités. Un autre but de la présente invention est de proposer une solution pour fabriquer les orifices pour le passage des tiges de verrouillage, de manière rapide et précise, cette solution étant applicable à tout type de bande de matière.

Dans ce but, l'invention concerne un procédé du genre indiqué en préambule, **caractérisé en ce qu'**il comporte une étape dans laquelle, pour réaliser lesdits orifices transversaux, on fend longitudinalement chacune des extrémités de ladite bande dans son épaisseur pour séparer la face supérieure de la face inférieure de ladite bande dans une zone de jonction s'étendant sur une largeur au moins équivalente à la surface occupée par lesdits orifices transversaux à réaliser, on dispose au moins une broche transversale dans la zone de jonction de chacune des extrémités, on réassemble les faces supérieure et inférieure de ladite bande dans ladite zone de jonction pour reconstituer les extrémités de ladite bande, puis on retire ladite broche transversale formant lesdits orifices transversaux.

Selon une variante de réalisation avantageuse, le présent procédé est **caractérisé en ce que** l'on découpe les dents formant lesdites dentelures après avoir fendu les extrémités de la bande de matière, on emboîte lesdites dentelures l'une dans l'autre, on dispose ladite broche transversale dans ladite zone de jonction, on réassemble les faces supérieure et inférieure de ladite bande dans ladite zone de jonction pour reconstituer les extrémités de ladite bande, on retire ladite broche transversale formant lesdits orifices transversaux et on sépare lesdites dentelures, de préférence en redécoupant lesdites dents.

Par ailleurs, conformément à une variante de réalisation du procédé selon l'invention, on réassemble les faces supérieure et inférieure de la zone de jonction par thermosoudage.

Selon une caractéristique additionnelle, l'on fend les extrémités de la bande sur une largeur couvrant plusieurs rangées d'orifices transversaux agencés pour recevoir plusieurs tiges de verrouillage parallèles et de préférence sur une longueur L égale à la largeur 1 de la bande.

Selon une première variante du présent procédé, on introduit dans ladite zone de jonction au moins une pièce de renfort de préférence à base de matière textile, formant le cas échéant au moins un fourreau pour recevoir au moins une broche transversale.

Selon une seconde variante du présent procédé, on crée dans ladite zone de jonction au moins un fourreau pour recevoir au moins une broche transversale en utilisant l'âme textile contenue dans ladite bande. Si l'âme textile de la bande comporte au moins deux plis textiles adjacents, on peut assembler lesdits plis textiles par des coutures transversales. Si l'âme textile de la bande comporte au moins un pli textile, on peut soit assembler des rubans textiles audit pli textile par des coutures transversales, soit replier ledit pli textile sur lui-même et le fermer par des coutures transversales.

Par ailleurs, pour réaliser le thermosoudage des faces supérieure et inférieure de ladite bande dans ladite zone de jonction, le présent procédé prévoit de placer lesdites extrémités sous pression.

Une autre caractéristique du présent procédé est encore définie par le fait que l'on découpe les dents formant lesdites dentelures par estampage, après l'étape de fendage des extrémités de ladite bande.

Selon une caractéristique additionnelle, l'on sépare également lesdites dentelures par estampage après l'étape de réassemblage des faces supérieure et inférieure de ladite bande. Dans ce cas, l'on estampe ladite bande à l'endroit précis où l'on a précédemment découpé lesdites dentelures et à l'aide du même outil d'estampage.

### Description sommaire des dessins :

La présente invention et ses avantages apparaîtront mieux dans la description suivante d'un mode de réalisation donné à titre d'exemple non limitatif, en référence aux dessins annexés, dans lesquels :
- les figures 1 à 7 représentent des vues de dessus des deux extrémités à assembler d'une bande transporteuse, au cours des différentes étapes du procédé de fabrication selon l'invention,
- la figure 2A représente une vue agrandie du détail D de 1a figure 2,
- la figure 7A représente une vue de dessus de deux tiges de verrouillage destinées à être introduites chacune dans un des orifices transversaux formés dans lesdites extrémités de la bande,
- la figure 8 représente une vue en coupe des deux extrémités assemblées d'une bande transporteuse selon l'invention, cette vue étant volontairement agrandie sans respecter l'échelle pour montrer la pièce de renfort ajoutée et formant des fourreaux pour recevoir les broches transversales, et
- les figures 9, 10 et 11 sont des vues agrandies des deux extrémités d'une bande transporteuse, correspondant à l'étape illustrée à la figure 2, montrant trois autres variantes de réalisation des fourreaux.

### Illustration de l'invention et meilleure manière de la réaliser :

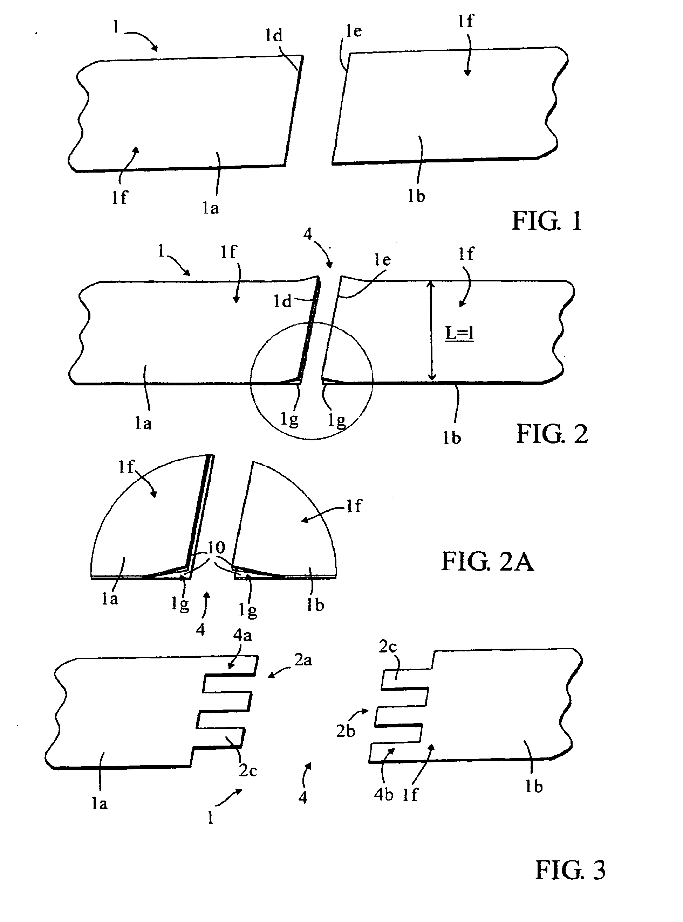

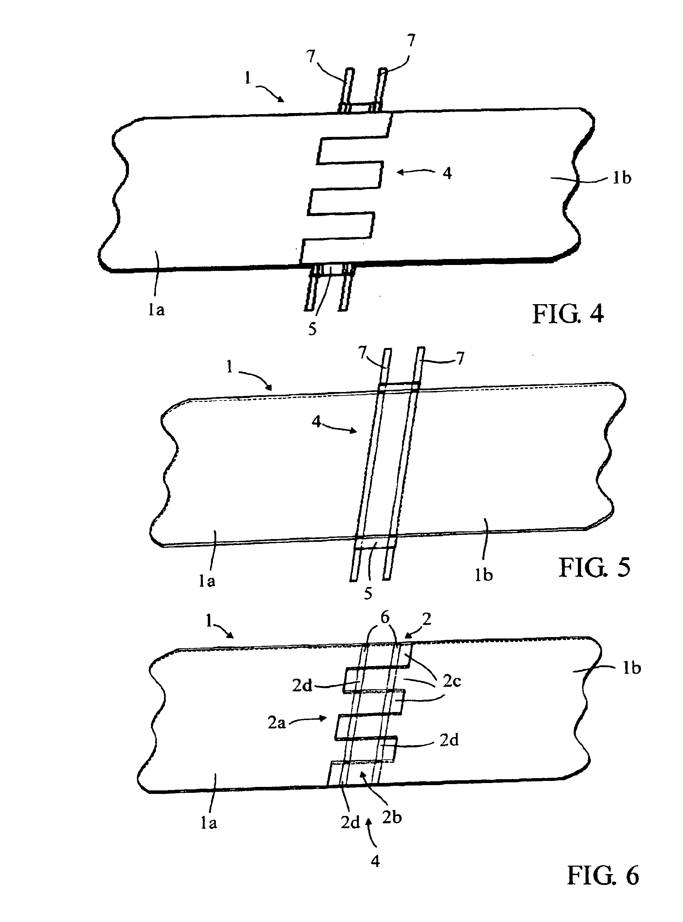

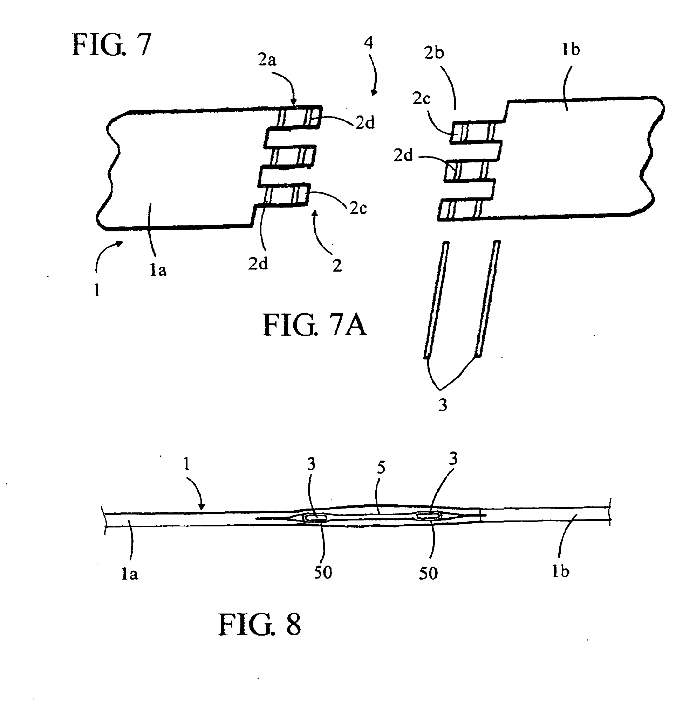

En référence aux figures, le présent procédé de fabrication consiste à intégrer dans les extrémités 1a, 1b d'une bande de matière, telle que par exemple une bande transporteuse 1 à âme textile 10 (cf. fig. 2A), des moyens de jonction réversible 2 (cf. fig. 6 et 7) permettant un assemblage démontable desdites extrémités 1a, 1b pour former une bande de matière en boucle. Ces moyens de jonction 2 comportent deux dentelures 2a, 2b découpées dans le plan des extrémités 1a, 1b, de forme complémentaire, agencées pour être emboîtées dans le plan desdites extrémités et verrouillées au moyen de tiges de verrouillage 3, introduites transversalement au travers de rangées d'orifices transversaux 2d réalisées dans les dents 2c des dentelures 2a, 2b. Le nombre de tiges de verrouillage 3 et d'orifices transversaux 2d n'est bien entendu pas limité et dépend essentiellement de la longueur des dentelures, ou de la résistance mécanique souhaitée. Par ailleurs, selon les applications, les tiges de verrouillage 3 peuvent être réalisées en métal ou en plastique. Dans le cas de bandes transporteuses de faible largeur, les tiges de verrouillage 3 peuvent également être avantageusement remplacées par des vis.

Dans l'exemple représenté (cf. fig.1), les deux extrémités 1a, 1b présentent des bords de jonction 1d, 1e, ces bords étant droits c'est à dire perpendiculaires au plan de la bande transporteuse 1 et parallèles entre eux de manière à pouvoir être parfaitement jointés. Des bords de jonction 1d, le biseautés, c'est à dire coupés en oblique dans l'épaisseur de la bande transporteuse 1 et parallèles entre eux pourraient également convenir pour la mise en oeuvre du présent procédé. Tel que visible à la figure 2, la première étape du procédé selon l'invention consiste à fendre longitudinalement les extrémités 1a, 1b dans l'épaisseur de la bande 1, de manière à séparer la face supérieure 1f de la face inférieure 1g (cf. fig. 2 et 2A) dans une zone de jonction 4 s'étendant sur chaque extrémité 1a, 1b sur une largeur au moins équivalente à celle nécessaire pour réaliser X rangées d'orifices transversaux 2d destinés chacun au passage d'une tige de verrouillage 3. Si la bande transporteuse 1 comporte une âme textile 10, comme illustré, on peut fendre les extrémités de la bande à proximité d'une couche textile ou entre deux couches textiles consécutives formant l'âme 10. Dans l'exemple représenté, la zone de jonction présente deux portions 4a, 4b qui partent respectivement d'un bord 1d, 1e d'une extrémité 1a, 1b et présentent une largeur appropriée pour réaliser deux rangées d'orifices transversaux 2d sur chacune des extrémités 1a, 1b. La longueur L de la zone de jonction 4 est de préférence égale à la largeur 1 de la bande transporteuse 1.

Conformément à la figure 3, les dents 2c formant les dentelures 2a, 2b sont ensuite découpées dans les extrémités 1a, 1b respectives, par exemple par estampage, ou toute autre technique similaire, de manière telle que les dentelures 2a, 2b soient complémentaires pour pouvoir être emboîtées, et de sorte que chacune d'entre elles intègre la portion 4a, 4b respective dans laquelle la face supérieure 1f est séparée de la face inférieure 1 g. Bien entendu, la forme et le nombre de dents 2c que comporte les dentelures 2a, 2b peuvent varier et sont adaptés aussi bien en fonction de la nature de la bande transporteuse que des caractéristiques mécaniques souhaitées de la future jonction. Un renforcement mécanique de ladite jonction peut ainsi être obtenu par exemple en augmentant le nombre de dents 2c de chaque dentelure 2a, 2b, ou en les réalisant plus longues et/ou plus fines.

La figure 4 illustre une étape suivante du présent procédé, dans laquelle les dentelures 2a, 2b ont été emboîtées, et deux broches transversales 7, de forme et de dimension identique à celles d'une tige de verrouillage 3, sont disposées dans la zone de jonction 4, entre les faces supérieure 1f et inférieure 1e. Selon les modes de réalisation de l'invention, une pièce de renfort 5, de préférence à base de matière textile, peut être introduite dans la zone de jonction 4 préalablement ou conjointement à la broche transversale 7. Une telle pièce de renfort 5 est posée dans la zone fendue, et peut avantageusement comporter un ou plusieurs fourreaux 50 (cf. fig. 8) dans chacun desquels une broche transversale 7 peut être enfilée. Elle permet avantageusement d'obtenir un renforcement mécanique des moyens de jonction 2 de la bande transporteuse 1. Bien entendu, cet exemple de réalisation n'est pas 1a seule possibilité de renforcer la zone de jonction.

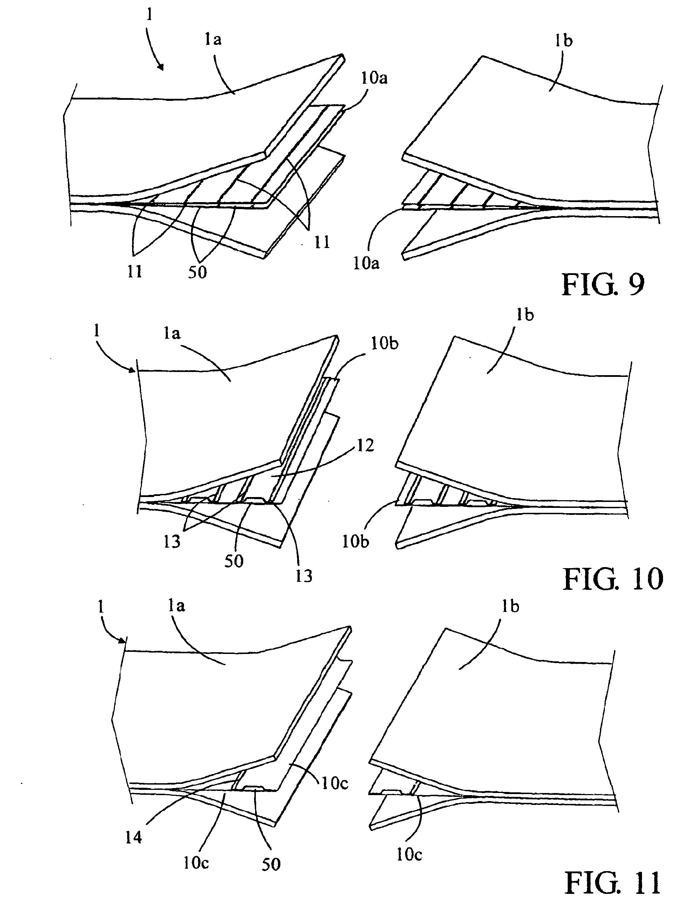

D'autres solutions sont illustrées aux figures 9, 10 et 11. Si la bande transporteuse 1 comporte une âme textile 10a formée d'au moins deux plis textiles adjacents, ou couches textiles, comme à la figure 9, on assemble lesdits plis textiles par des coutures transversales 11 pour renforcer mécaniquement la zone de jonction et créer simultanément des fourreaux 50 permettant d'enfiler les broches transversales 7. Si la bande transporteuse 1 ne comporte qu'un pli textile 10b, comme illustré à la figure 10, on forme les fourreaux 50 en rapportant des rubans textiles 12 que l'on assemble au pli textile 10b par des coutures transversales 13. Dans le cas où la bande transporteuse 1 ne comporte qu'un pli textile 10c, comme illustré à la figure 11, on peut également former les fourreaux 50 en repliant le pli textile 10c sur lui-même et en fermant les fourreaux 50 par des coutures transversales 14. Dans ce cas, on découpe les couches supérieure et inférieure de la bande transporteuse 1 plus courtes que 1e pli textile 10c. Bien entendu d'autres variantes découlant de ces exemples peuvent être envisagées. De même, le nombre de fourreaux 50 n'est pas limité aux exemples illustrés. De même, le ou les plis textiles utilisés pour créer les fourreaux 50 et renforcer la zone de jonction ne sont pas nécessairement situés dans l'épaisseur de la bande transporteuse 1, mais peuvent constitués la couche supérieure ou la couche inférieure de ladite bande.

Le procédé selon l'invention prévoit de réassembler ensuite les faces supérieure 1f et inférieure le, de préférence par thermosoudage sous pression, ou tout moyen similaire, des deux extrémités 1a, 1b de la bande transporteuse 1. Une fois celles-ci soudées, les deux broches transversales 7 sont noyées dans l'épaisseur de ladite bande transporteuse 1 (cf. fig. 5). Après retrait de ces broches transversales 7, deux passages transversaux 6 agencés pour accueillir chacun une tige de verrouillage 3, sont libérés dans l'épaisseur de la bande transporteuse 1. Tel que représenté à la figure 6, les dents des deux dentelures 2a, 2b sont alors à nouveau découpées, par exemple par estampage, et de préférence à l'endroit précis de la première découpe, au moyen du même outil d'estampage. Une telle manière de procéder est particulièrement avantageuse dans le cas d'une bande transporteuse à âme de traction, dans laquelle il faut impérativement éviter de couper le câblage interne à plusieurs endroits.

Finalement, la mise en oeuvre du présent procédé a permis la fabrication d'une bande transporteuse 1 comportant des moyens de jonction 2 directement intégrés aux deux extrémités 1a, 1b à assembler pour former une boucle fermée. Tel que visible à 1a figure 7, chaque extrémité 1a, 1b comporte à présent une dentelure 2a, 2b complémentaire de celle que comporte l'autre extrémité 1a, 1b, et dont chaque dent 2c est traversée par des orifices transversaux 2d, parallèles entre eux. Ces extrémités 1a, 1b peuvent ainsi être assemblées et démontées à volonté, en introduisant ou retirant les tiges de verrouillage 3 au travers des orifices transversaux 2d. Le fait d'avoir intégré une pièce de renfort 5 ou d'avoir ajouté des coutures 11, 13, 14 (cf. fig. 9, 10, 11) dans l'épaisseur de la bande au niveau des zones de jonction 4a, 4b permet en outre avantageusement d'éviter tout étirement intempestif du pas du crantage au niveau des extrémités 1a, 1b assemblées, de garantir le parfait engrenage de la bande transporteuse sur les poulies d'entraînement dans le temps, et de renforcer la résistance mécanique dans la zone de jonction en prolongeant ou en complétant l'âme textile 10 si la bande en est pourvue.

Bien entendu, selon d'autres variantes du présent procédé, le nombre de broches transversales 7 disposées dans chacune des fentes réalisées dans les extrémités 1a, 1b pourra être différent et adapté au nombre de tiges de verrouillage 3 souhaité. De même, il est possible de découper les dentelures 2a, 2b préalablement à la réalisation des orifices transversaux 2d ou à d'autres moments au cours du procédé.

### Possibilités d'application industrielle :

Il ressort clairement de cette description que l'invention permet d'atteindre les buts fixés, à savoir proposer un procédé de fabrication rapide et précis de moyens d'assemblage dans les deux extrémités 1a, 1b de bandes de matière directement intégrés auxdites deux extrémités 1a, 1b. Le procédé selon l'invention présente en outre l'avantage d'être applicable à tout type de bandes de matière, qu'elles soient élastiques, à âme textile, à structure extérieure, crantées ou non, à armature noyée, dont il permet d'améliorer l'aspect esthétique final en évitant le recours à des moyens d'assemblage rapportés.

La présente invention n'est pas limitée à l'exemple de réalisation décrit mais s'étend à toute modification et variante évidentes pour un homme du métier tout en restant dans l'étendue de la protection définie dans les revendications annexées.

## Revendications

1. Procédé de fabrication d'une bande (1) de matière en boucle, telle que notamment une bande transporteuse, un convoyeur, une courroie de transmission ou similaire, dans laquelle les extrémités de ladite bande sont assemblées par emboîtement de deux dentelures (2a, 2b) de forme complémentaire prévues respectivement dans le plan de chacune des extrémités (1a, 1b), les dents (2c) de chaque dentelure (2a, 2b) comportant au moins un orifice transversal (2d) aligné avec celui des dents (2c) voisines, de sorte à définir, lorsque lesdites dentelures (2a, 2b) sont emboîtées, au moins un passage transversal (6) agencé pour accueillir au moins une tige de verrouillage (3) de ladite jonction, ledit procédé étant **caractérisé en ce qu'**il comporte une étape dans laquelle pour réaliser lesdits orifices transversaux (2d), on fend longitudinalement chacune des extrémités (1a, 1b) de ladite bande (1) dans son épaisseur pour séparer la face supérieure de la face inférieure de ladite bande (1) dans une zone de jonction s'étendant sur une largeur au moins équivalente à la surface occupée par lesdits orifices transversaux (2d) à réaliser, on dispose au moins une broche transversale (7) dans la zone de jonction de chacune des extrémités, on réassemble les faces supérieure et inférieure de ladite bande dans ladite zone de jonction pour reconstituer les extrémités (1a, 1b) de ladite bande (1), puis on retire ladite broche transversale (7) formant lesdits orifices transversaux (2d).

2. Procédé selon la revendication 1, **caractérisé en ce que** l'on découpe les dents (2c) formant lesdites dentelures (2a, 2b) après avoir fendu les extrémités (1a, 1b) de la bande (1) de matière, on emboîte lesdites dentelures (2a, 2b) l'une dans l'autre, on dispose ladite broche transversale (7) dans ladite zone de jonction, on réassemble les faces supérieure et inférieure de ladite bande (1) dans ladite zone de jonction pour reconstituer les extrémités (1a, 1b) de ladite bande (1), on retire ladite broche transversale (7) formant lesdits orifices transversaux (2d) et on sépare lesdites dentelures (2a, 2b).

3. Procédé selon la revendication 2, **caractérisé en ce que** pour séparer lesdites dentelures, on redécoupe les dents.

4. Procédé selon la revendication 2, **caractérisé en ce que** pour réassembler les faces supérieure et inférieure de la zone de jonction, on procède par thermosoudage.

5. Procédé selon l'une quelconque des revendications précédentes, **caractérisé en ce que** l'on fend les extrémités (1a, 1b) de la bande (1) sur une largeur couvrant plusieurs rangées d'orifices transversaux (2d) agencés pour recevoir plusieurs tiges de verrouillage parallèles (3).

6. Procédé selon l'une quelconque des revendications précédentes, **caractérisé en ce que** l'on fend les extrémités (1a, 1b) sur une longueur L égale à la largeur 1 de la bande.

7. Procédé selon l'une quelconque des revendications précédentes, **caractérisé en ce que** l'on introduit au moins une pièce de renfort (5) dans ladite zone de jonction (4).

8. Procédé selon la revendication 7, **caractérisé en ce que** l'on utilise une pièce de renfort (5) formant au moins un fourreau (50) pour recevoir au moins une broche transversale (7).

9. Procédé selon l'une quelconque des revendications 7 ou 8, **caractérisé en ce que** l'on utilise une pièce de renfort (5) à base de matière textile.

10. Procédé selon l'une quelconque des revendications 1 à 6, **caractérisé en ce que** l'on crée dans ladite zone de jonction (4) au moins un fourreau (50) pour recevoir au moins une broche transversale (7) en utilisant l'âme textile (10a, 10b, 10c) contenue dans ladite bande (1).

11. Procédé selon la revendication 10, dans lequel l'âme textile de la bande (1) comporte au moins deux plis textiles (10a) adjacents, **caractérisé en ce que** l'on assemble lesdits plis textiles (10a) par des coutures transversales (11).

12. Procédé selon la revendication 10, dans lequel l'âme textile de la bande (1) comporte au moins un pli textile (10b), **caractérisé en ce que** l'on assemble des rubans textiles (12) audit pli textile (10b) par des coutures transversales (13).

13. Procédé selon la revendication 10, dans lequel l'âme textile de la bande (1) comporte au moins un pli textile (10c), **caractérisé en ce que** l'on replie ledit pli textile (10c) sur lui-même et on le ferme par des coutures transversales (14).

14. Procédé selon la revendication 4, **caractérisé en ce que** pour réaliser le thermosoudage des faces supérieure et inférieure de ladite bande dans ladite zone de jonction (4), on place lesdites extrémités (1a, 1b) sous pression.

15. Procédé selon l'une quelconque des revendications 2 à 14, **caractérisé en ce que** l'on découpe les dents (2c) formant lesdites dentelures (2a, 2b) par estampage après l'étape de fendage des extrémités de ladite bande.

16. Procédé selon l'une quelconque des revendications 2 à 15, **caractérisé en ce que** l'on sépare lesdites dentelures (2a, 2b) par estampage après l'étape de réassemblage des faces supérieure et inférieure de ladite bande.

17. Procédé selon la revendication 16, **caractérisé en ce que** l'on estampe ladite bande (1) de matière à l'endroit précis où l'on a précédemment découpé lesdites dentelures (2a, 2b) et à l'aide du même outil d'estampage.

## Patentansprüche

1. Verfahren zur Herstellung eines Bandschleifenmaterials (1), wie unter anderem ein Förderband, ein Förderer, ein Antriebsriemen oder ähnlich, in dem die Enden des besagten Bandes durch Ineinanderfügen von zwei Zähnungen (2a, 2b) mit komplementären Formen, die jeweils in der Ebene jedes der Enden (1a, 1b) vorgesehen sind, zusammengefügt werden, wobei die Zähne (2c) jeder Zähnung (2a, 2b) zumindest eine Queröffnung (2d) betragen, die auf die der Nachbarzähne (2c) ausgerichtet ist, um, wenn die besagten Zähnungen (2a, 2b) ineinandergefügt sind, zumindest einen Querdurchgang (6) zu bilden, der ausgelegt ist, um zumindest einen Stift. (3) zur Verriegelung der besagten Verbindung aufzunehmen, wobei das besagte Verfahren **dadurch gekennzeichnet ist, dass** es einen Schritt beträgt, in dem, um die besagte Queröffnung (2d) herzustellen, man jedes der Enden (1a, 1b) des besagten Bandes (1) in seiner Dicke in Längsrichtung aufspaltet, um die Oberseite von der Unterseite des besagten Bandes (1) in einem Verbindungsbereich zu trennen, der sich auf eine Breite erstreckt, die zumindest der von den herzustellenden Queröffnungen (2d) eingenommenen Fläche entspricht, man zumindest einen Querstift (7) in dem Verbindungsbereich jedes der Enden anordnet, man die obere und die untere Seite des besagten Bandes in dem besagten Verbindungsbereich wieder zusammenfügt um die Enden (1a, 1b) des besagten Bandes (1) wiederherzustellen, man dann den besagten, die besagten Queröffnungen (2d) bildenden Querstift (7) entfernt.

2. Verfahren nach Anspruch 1, **dadurch gekennzeichnet, dass** man die Zähne (2c), die die besagten Zähnungen (2a, 2b) bilden, ausschneidet nachdem man die Enden (1a, 1b) des Bandmaterials (1) aufgespaltet hat, man die besagten Zähnungen (2a, 2b) ineinanderfügt, man den besagten Querstift (7) in dem besagten Verbindungsbereich anordnet, man die obere und die untere Seite des besagten Bandes (1) in dem besagten Verbindungsbereich wieder zusammenfügt, um die Enden (1a, 1b) des besagten Bandes (1) wieder herzustellen, man den besagten Querstift (7), der die Queröffnungen (2d) bildet, entfernt, und man die besagten Zähnungen (2a, 2b) trennt.

3. Verfahren nach Anspruch 2, **dadurch gekennzeichnet, dass**, um die besagten Zähnungen zu trennen, man die Zähne erneut ausschneidet.

4. Verfahren nach Anspruch 2, **dadurch gekennzeichnet, dass**, um die obere und die untere Seite des Verbindungsbereichs wieder zusammenzufügen, man ein Warmschweißverfahren anwendet.

5. Verfahren nach einem beliebigen der vorhergehenden Ansprüche, **dadurch gekennzeichnet, dass** man die Enden (1a, 1b) von Band (1) auf einer Breite aufspaltet, die mehrere Reihen von für die Aufnahme von mehreren parallelen Verriegelungs-Stiften (3) ausgelegten Queröffnungen (2d) abdeckt.

6. Verfahren nach einem beliebigen der vorhergehenden Ansprüche, **dadurch gekennzeichnet, dass** man die Enden (1a, 1b) auf einer Länge L gleich der Breite 1 des Bandes aufspaltet.

7. Verfahren nach einem beliebigen der vorhergehenden Ansprüche, **dadurch gekennzeichnet, dass** man zumindest ein Verstärkungs-Teil (5) in den besagten Verbindungsbereich (4) einfügt.

8. Verfahren nach Anspruch 7, **dadurch gekennzeichnet, dass** man ein Verstärkungs-Teil (5) verwendet, das zumindest eine Scheide (50) bildet, um zumindest einen Querstift (7) aufzunehmen.

9. Verfahren nach einem beliebigen der Ansprüche 7 oder 8, **dadurch gekennzeichnet, dass** man ein textilbasiertes Verstärkungs-Teil (5) verwendet.

10. Verfahren nach einem beliebigen der Ansprüche 1 bis 6, **dadurch gekennzeichnet, dass** man in dem besagten Verbindungsbereich (4) zumindest eine Scheide (50) herstellt, um zumindest einen Querstift (7) aufzunehmen, wobei man die in dem besagten Band (1) enthaltene Textileinlage (10a, 10b, 10c) verwendet.

11. Verfahren nach Anspruch 10, in dem die Textileinlage von Band (1) zumindest zwei anliegende Textil-Lagen (10a) beträgt, **dadurch gekennzeichnet, dass** man die besagten Textil-Lagen (10a) mittels Quernähten (11) zusammenfügt.

12. Verfahren nach Anspruch 10, in dem die Textileinlage von Band (1) zumindest eine Textil-Lage (10b) beträgt, **dadurch gekennzeichnet, dass** man Textilbänder (12) mittels Quernähten (13) auf die besagte Textil-Lage (10b) näht.

13. Verfahren nach Anspruch 10, in dem die Textileinlage von Band (1) zumindest eine Textil-Lage (10b) beträgt, **dadurch gekennzeichnet, dass** man die besagte Textil-Lage (10c) auf sich selbst zurückfaltet und sie mittels Quernähten (14) schließt.

14. Verfahren nach Anspruch 4, **dadurch gekennzeichnet, dass**, um das Warmschweißen der oberen und der unteren Seite des besagten Bandes in dem besagten Verbindungsbereich (4) durchzuführen, man die besagten Enden (1a, 1b) unter Druck setzt.

15. Verfahren nach einem beliebigen der Ansprüche 2 bis 14, **dadurch gekennzeichnet, dass** man die Zähne (2c) die die besagten Zähnungen (2a, 2b) bilden, durch Stanzen herstellt, nach dem Schritt des Aufspaltens der Enden des besagten Bandes.

16. Verfahren nach einem beliebigen der Ansprüche 2 bis 15, **dadurch gekennzeichnet, dass** man die besagten Zähnungen (2a, 2b) durch Stanzen trennt, nach dem Schritt des erneuten Zusammenfügens der oberen und der unteren Seite des besagten Bandes.

17. Verfahren nach Anspruch 16, **dadurch gekennzeichnet, dass** man das besagte Bandmaterial (1) genau an derselben Lage stanzt, an der man zuvor die besagten Zähnungen (2a, 2b) ausgeschnitten hat, und zwar mit demselben Stanz-Werkzeug.

## Claims

1. Method for manufacturing a strip (1) of material in a loop, such as in particular a conveyor belt, a conveyor, a power transmission belt or similar, wherein the ends of said strip are assembled by fitting into each other two serrations (2a, 2b) with complementary shapes provided respectively in the plane of each of the ends (1a, 1b), the teeth (2c) of each serration (2a, 2b) comprising at least one transversal opening (2d) aligned with that of the neighboring teeth (2c), so as to define, when said serrations (2a, 2b) are fitted into each other, at least one transversal passage (6) arranged to house at least one locking rod (3) for said junction, said method being **characterized in that** it includes a step in which, in order to produce said transversal openings (2d), one splits longitudinally each of the ends (1a, 1b) of said strip (1) in its thickness so as to separate the upper side from the lower side of said strip (1) in a junction area that extends on a width at least equivalent to the surface occupied by said transversal openings (2d) to be produced, one arranges at least one transversal pin (7) in the junction area of each of the ends, one reassembles the upper and lower sides of said strip in said junction area so as to restore the ends (1a, 1b) of said strip (1), then one removes said transversal pin (7) forming said transversal openings (2d).

2. Method according to claim 1, **characterized in that** one cuts the teeth (2c) forming said serrations (2a, 2b) after having split the ends (1a, 1b) of the strip of material (1), one fits said serrations (2a, 2b) into each other, one arranges said transversal pin (7) in said junction area, one reassembles the upper and lower sides of said strip (1) in said junction area so as to restore the ends (1a, 1b) of said strip (1), one removes said transversal pin (7) forming said transversal openings (2d) and one separates said serrations (2a, 2b).

3. Method according to claim 2, **characterized in that**, to separate said serrations, one cuts the teeth again.

4. Method according to claim 2, **characterized in that**, to reassemble the upper and lower sides the junction area, one proceeds by thermobonding.

5. Method according to any of the previous claims, **characterized in that** one splits the ends (1a, 1b) of strip (1) on a width covering several rows of transversal openings (2d) arranged to receive several parallel locking rods (3).

6. Method according to any of the previous claims, **characterized in that** one splits the ends (1a, 1b) on a length L equal to the width 1 of the strip.

7. Method according to any of the previous claims, **characterized in that** one inserts at least one reinforcement element (5) in said junction area (4).

8. Method according to claim 7, **characterized in that** one uses a reinforcement element (5) forming at least one sheath (50) to receive at least one transversal pin (7).

9. Method according to any of claims 7 or 8, **characterized in that** one uses a textile material-based reinforcement element (5).

10. Method according to any of claims 1 to 6, **characterized in that** one creates in said junction area (4) at least one sheath (50) to receive at least one transversal pin (7) using the textile core (10a, 10b, 10c) contained in said strip (1).

11. Method according to claim 10, wherein the textile core of strip (1) comprises at least two adjacent textile plies (10a), **characterized in that** one assembles said textile plies (10a) by means of transversal seams (11).

12. Method according to claim 10, wherein the textile core of strip (1) comprises at least one textile ply (10b), **characterized in that** one assembles textile tapes (12) on said textile ply (10b) by means of transversal seams (13).

13. Method according to claim 10, wherein the textile core of strip (1) comprises at least one textile ply (10c), **characterized in that** one folds back said textile ply (10c) over itself and one closes it by means of transversal seams (14).

14. Method according to claim 4, **characterized in that**, to perform the thermobonding of the upper and lower sides of said strip in said junction area (4), one places said ends (1a, 1b) under pressure.

15. Method according to any of claims 2 to 14, **characterized in that** one separates said teeth (2c) forming said serrations (2a, 2b) by die stamping after the step of splitting the ends of said strip.

16. Method according to any of claims 2 to 15, **characterized in that** one separates said serrations (2a, 2b) by die stamping after the step of reassembling the upper and lower sides of said strip.

17. Method according to claim 16, **characterized in that** one stamps said strip of material (1) at the exact location where said serrations (2a, 2b) have been cut previously, and using the same stamping die.
